# EUROPEAN PATENT SPECIFICATION

(11) **EP 1 993 168 B1**
(45) Date of publication and mention of the grant of the patent: **13.11.2013**
(21) Application number: 08103626.1
(22) Date of filing: 21.04.2008
(51) Int. Cl.: H01Q 9/26, H01Q 9/28, H01Q 21/26, H01Q 1/22

(54) **Crossed dual tag and RFID system using the crossed dual tag**
Gekreuztes Doppeltag und RFID-System mit dem gekreuzten Doppeltag
Double étiquette croisée et système RFID utilisant la double étiquette croisée

(30) Priority: 09.05.2007 JP 2007125055
(43) Date of publication of application: 19.11.2008
(73) Proprietor: Fujitsu Limited, Kawasaki-shi, Kanagawa 211-8588 (JP)
(72) Inventor: Kai, Manabu c/o Fujitsu Limited, Kawasaki-shi, Kanagawa 211-8588 (JP); Maniwa, Toru c/o Fujitsu Limited, Kawasaki-shi, Kanagawa 211-8588 (JP); Yamagajo, Takashi c/o Fujitsu Limited, Kawasaki-shi, Kanagawa 211-8588 (JP)
(74) Representative: Stebbing, Timothy Charles

(56) References cited:
- EP-A- 1 370 007
- EP-A- 1 703 589
- US-A1- 2002 109 636
- US-A1- 2005 040 994
- US-A1- 2006 208 900

## Description

The present invention relates to a crossed dual tag, the communication distance of which with a reader/writer is extended by crossing two linear polarized wave tags at right angles, and to an RFID (Radio Frequency IDentification) system using the crossed dual tag.

Conventionally, RFID systems are put into practical use as a non-contact authentication technology for recording various items of information about a person or an object in an IC (Integrated Circuit) chip of an RFID, and for wirelessly reading the information with a reader/writer.

The RFID is generally referred to as a wireless tag or merely as a tag although it is referred to in a variety of ways.

A tag is composed of a metal antenna formed on a plane of a sheet, a film, etc. with a thickness of approximately 0.1 mm, and an IC chip connected to the feeding point of the antenna.

Normally, an IC chip is extremely small, and its thickness and area size are on the order of 0.2 mm and 1-mm-square respectively. An antenna connected to the IC chip is formed as a dipole antenna pattern, and its communication wave generated by a resonant current is a linear polarized wave.

In an RFID system, a reader/writer transmits a signal of a wireless radio wave of approximately 1W, the tag receives the signal and returns information within the IC chip as a response signal to the reader/writer, and the reader/writer reads the information.

The tag does not include a battery. When the tag approaches to the reader/writer, an electric current is generated by the resonation of the antenna of the tag with the radio wave emitted by the reader/writer. Only at this moment, the circuit of the IC chip operates to transmit the information therein to the reader/writer.

The antenna built into the reader/writer is formed to emit a circular polarized radio wave for enabling a communication with the tag generating a linear polarized wave for its communication regardless of any direction of the orientation of the tag.

UHF (Ultra High Frequency) ranging from 860 to 960 MHz is applied as the radio wave used for this transmission. For example, UHF of 952 to 954 MHz is used in Japan.

A communication distance between the reader/writer and the tag is approximately 3 to 5 m under ideal conditions although it depends on the gain of the antenna of the tag, the operational voltage of the IC chip, an ambient environment, or the like.

The antenna of the reader/writer communicates by using a circular polarized radio wave, whereas the antenna of the tag communicates by using a linear polarized wave. Therefore, power produced by resonating with the radio wave received from the reader/writer, namely, the power received from the reader/writer is one half of that in the case where the tag is assumed to generate the circular polarized wave.

Transmission power is attenuated in inverse proportion to the square of a distance. Therefore, the above described actual communication distance 3 to 5 m is reduced to 1/√2=1/1.41 of that in the case where also the tag generates a circular polarized wave.

For a tag intended to merely emit a circular polarized wave, a configuration where two dipole antennas are crossed at right angles, two feeding terminals for connecting one of the dipoles of one dipole antenna to one of the dipoles of the other dipole antenna and for connecting the other dipole of one dipole antenna to the other dipole of the other dipole antenna are provided, and an IC tag and a circuit having a phase difference of n/2 are connected between the two feeding terminals is proposed (for example, see Patent Document 1).

When the tag is implemented as the tag generating a circular polarized wave as described above, the two orthogonal dipole antennas using linear polarized waves must be connected with a circuit having the phase difference of n/2, namely, a 90° phase shifter.

The tag normally has a simple structure implemented by directly connecting a dipole antenna pattern to a small IC with an area size of an approximately 1-mm-square. Therefore, the structure that requires a 90° phase shifter in addition to the IC as disclosed by Patent Document 1 leads to an undesirable increase in an overall cost.

Additionally, there is disclosed by Patent Document 1 a tag configured specifically for generating a circular polarized wave, in which the dipole antennas are crossed at right angles and prevented from being separated, and connected to the IC tag and the 90° phase shifter. This tag must be specifically designed and manufactured with dedicated process steps, leading to lack in the degree of flexibility in design.
[Patent Document 1] Japanese Published Unexamined Application No. 2003-249820

US-A-2002/0109636 discloses an omnidirectional antenna for use in a reader/writer of an RFID system. A pair of antenna coils are crossed at right angles to create an omni- or multi-directional field when powered by a remote interrogator/reader unit, so that RFID tags carried on items such as livestock can be read regardless of their orientation.

EP-A-1 703 589 and US-A-2006/0208900 each disclose a tag antenna having folded dipole parts extending from either side of a chip feeding part, and an inductance portion which connects the dipole parts by being routed around the chip feeding part.

A crossed dual tag in a first aspect of the present invention is a tag configured by comprising first and second tags, each of which comprises, on one plane, a dipole antenna formed with conductors, a feeding part to which an IC chip is connected at the center of the dipole antenna, and a loop-shaped inductance part that is formed between the dipoles of the dipole antenna and connected to the dipoles of the dipole antenna in parallel with respect to the feeding part, and by crossing the first and the second tags so that the loops of the inductance part overlap.

In this crossed dual tag, the inductance part is formed in the shape of, for example, a square, a circle, or a loop similar to a square or circle.

Preferably, the first and the second tags are crossed so that the loops of the inductance parts overlap as wide as possible, and stacked to contact as closely as possible. The first and the second tags generate a circular polarized wave, for example, at the crossing angle of 90°.

The crossed dual tag may further comprise a holding member having a groove according to the crossed shape of the first and the second tags. The holding member holds the first and the second tags in the crossed shape with its groove.

An RFID (Radio Frequency IDentification) system in a second aspect of the present invention is a system including a crossed dual tag configured by comprising first and second tags, each of which comprises, on one plane, a dipole antenna formed with conductors, a feeding part to which an IC chip is connected at the center of the dipole antenna, and a loop-shaped inductance part that is formed between the dipoles of the dipole antenna and connected to the dipoles of the dipole antenna in parallel with respect to the feeding part , and by crossing the first and the second tags so that the loops of the inductance parts overlap, and a reader/writer that emits a wireless signal of a circular polarized wave in order to read information of the first or the second tag.

In this RFID system, for example, the first tag is set as a tag from which information is to be read, the second tag is set as a tag from which information is not to be read, and the reader/writer is configured to always read only the information of the first tag.

Additionally, for example, the first and the second tags may respectively have user memory areas to which the same information is written, and the reader/writer may be configured to switch the surface of the circular polarized wave of the wireless signal between forward and backward directions, and to read the information written to the user memory area from the first or the second tag, depending on which responds more strongly to the switched circular polarized wave.

Furthermore, for example, the first and the second tags may comprise user memory areas to which mutually different information are written, and the reader/writer may be configured to sequentially switch the surface of the circular polarized wave of the wireless signal between the forward and the backward directions, and to read the information written to the user memory areas from both the first and the second tags by reading the information written to the user memory area from the first or the second tag, depending on which responds more strongly to the switched circular polarized wave.

As described above, in embodiments of the present invention, the two tags generating linear polarized waves are used unchanged as one crossed-dual tag by being crossed and stacked without requiring a special circuit, etc., and the crossed dual tag generates a circular polarized wave.

As a result, a tag which generates a circular polarized wave and the communication distance of which from a reader/writer is extended by 1.41 times the communication distance in the case of using one tag generating a linear polarized wave, and an RFID system using this tag, can be provided at low cost.

Reference is made, by way of example only, to the accompanying drawings in which:
Fig. 1 is a perspective view showing a configuration of an antenna of an extremely small tag suitable for use in a preferred embodiment;
Fig. 2 is a chart representing the frequency characteristic of reflection of the tag antenna in Fig. 1, which is calculated by an electromagnetic field simulator;
Fig. 3 is a chart representing the value of an antenna gain of the tag antenna in Fig. 1, which is calculated by the electromagnetic field simulator;
Fig. 4 is a chart representing a communication distance characteristic obtained by combining the reflection characteristic and the gain characteristic of the tag antenna in Fig. 1;
Fig. 5 is a perspective view showing the configuration of a crossed dual tag in a preferred embodiment, and a top view showing the configuration shown in the perspective view, from which a resinous protection film is removed;
Fig. 6 is a schematic perspective view showing a state where crossed and stacked first and second tags of the crossed dual tag in the preferred embodiment are held in a holder;
Fig. 7 is a schematic top view for explaining the operations of the crossed dual tag in the preferred embodiment, which are performed for a reader/writer (RW);
Fig. 8 is a schematic diagram showing a calculation model for calculating the operations of the crossed dual tag in the preferred embodiment with an electromagnetic field simulator;
Fig. 9 is a chart representing a relationship between the voltages and the cycles of the crossed dual tag in the preferred embodiment, which are calculated with the electromagnetic field simulator, and a chart representing a relationship between the cycles and the phases of the crossed dual tag;
Fig. 10 shows charts representing results of an experiment, which are calculated by the electromagnetic field simulator when the first and the second tags do not make close contact in their crossed portions and a gap of a distance h of 1 mm is provided; and
Fig. 11 shows charts representing results of an experiment, which are calculated by the electromagnetic field simulator when the first and the second tags are crossed not to make the loops of their inductance parts overlap at all.

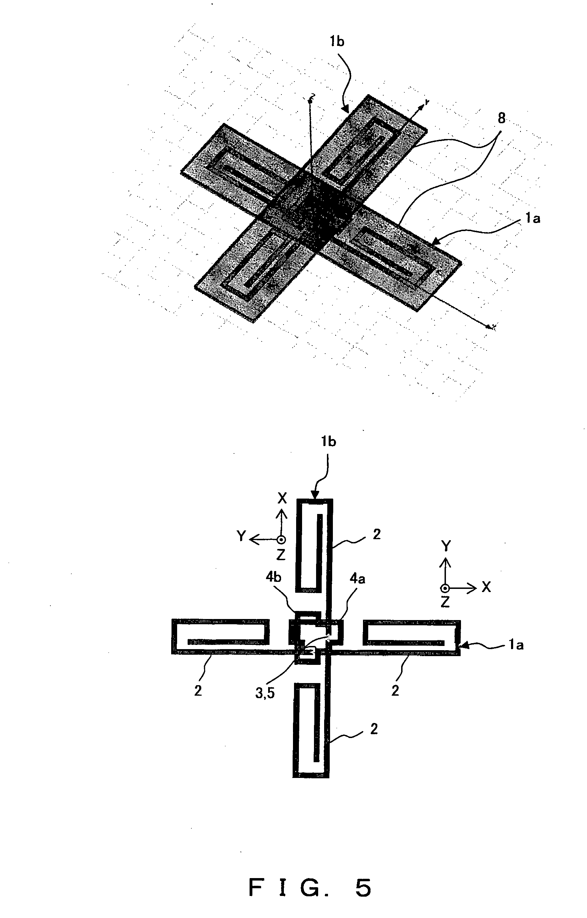

A preferred embodiment according to the present invention will be described later with reference to Figures 5 to 11 of the drawings. First, there will be described a single tag suitable for use in the preferred embodiment.

### (Single Tag Configuration)

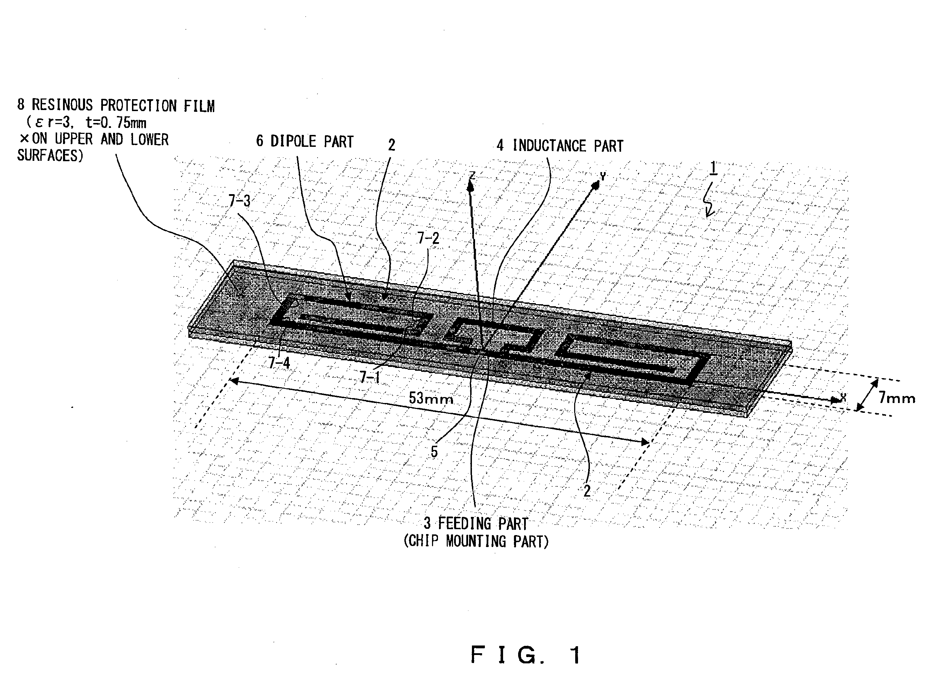

Fig. 1 is a perspective view showing a configuration of an extremely small tag and its antenna. The dimensions of the tag 1 shown in this figure are 53 mm wide by 7 mm deep.

The tag 1 comprises, on one plane, a dipole antenna 2 formed with conductors, a feeding part 3, and an inductance part 4. Preferably, Cu, Au, or Al is used as the above described conductors.

The feeding part 3 configures a chip mounting part at the center of the dipole antenna 2. In the chip mounting part, an IC chip 5 is mounted. 1-mm-wide dipole parts 6 are formed on both sides of the feeding part 3. The entire dipole antenna 2 is configured in this way.

The dipoles of the dipole antenna 2 composed of the dipole parts 6 arranged on both sides are respectively formed in the shape of a rectangular eddy (folded rectangle) by being inwardly bent at least at four bending parts (7-1, 7-2, 7-3, 7-4). Namely, the dipole parts 6 have the four bending parts (folded parts) respectively.

The total length of the dipole antenna 2 when the four bending parts 7 are linearly stretched respectively (i.e. when the folded parts are laid end to end) is formed to become shorter than one half of the resonance wavelength of the antenna.

Additionally, the above described inductance part 4 is arranged between the dipole parts 6 and 6, which are formed in the shape of the rectangular eddy, in the vicinity of the center of the dipole antenna 2.

The inductance part 4 is connected to the dipole parts 6 and 6 in parallel with respect to the feeding part 3 of the dipole antenna 2, namely, the IC chip 5.

The IC chip 5 mounted in the feeding part 3 is, for example, a chip with Rc of 500 Q and Cc of 1.4 pF. The inductance part 4 is arranged on the side of the antenna, and cancels the capacitive component of 1.4 pF of the IC chip 5.

The above described inductance part 4 is formed in the shape of almost one (an almost-complete) rectangular loop in the configuration shown in Fig. 1. The loop shape of the inductance part 4 is not limited to this one, and may be the shape of a square, a circle, or a shape similar to such loops.

Resinous protection films 8 with a permittivity εr of 3 and a thickness t of 0.75 mm are respectively overlaid on both surfaces (the top and the bottom surfaces in Fig. 1) of the tag 1.

For example, a terephthalate ethylene film, etc. is used as the resinous protection films 8. Alternatively to the resinous protection films, suitable paper sheets may be overlaid on both of the surfaces of the tag 1.

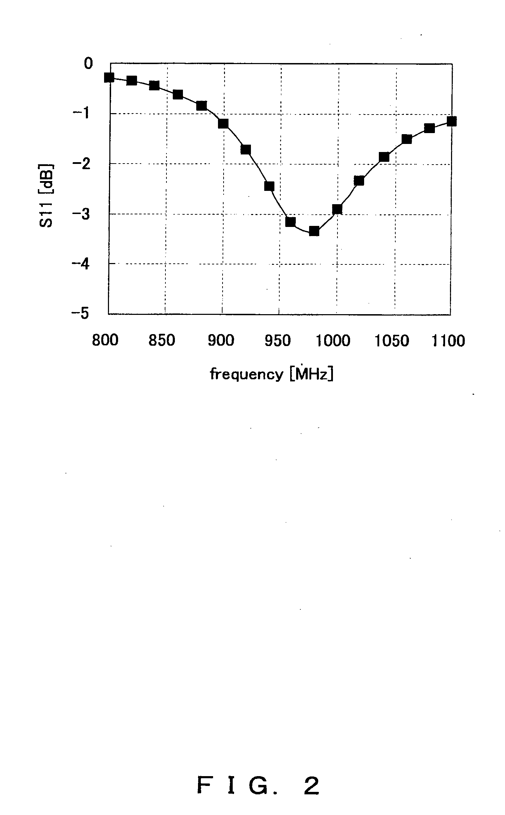

Fig. 2 is a chart representing the frequency characteristic of reflection of the dipole antenna 2 of the tag 1, which is calculated with an electromagnetic field simulator.

In this figure, the horizontal axis indicates the frequency (800 to 1100 MHz), whereas the vertical axis indicates the reflection (-5 to 0 dB). As is known from this figure, the reflection is the lowest in the vicinity of 975 MHz.

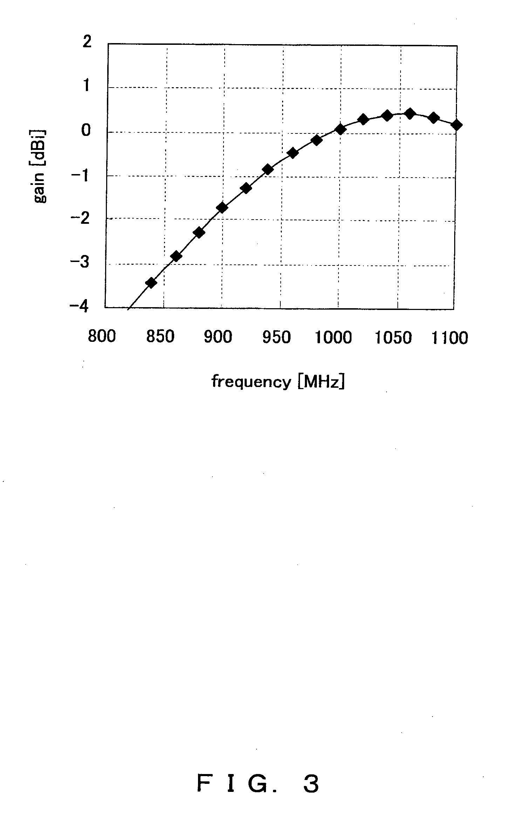

Fig. 3 is a chart representing the value of the gain of the dipole antenna 2 of the tag 1, which is calculated with the above described electromagnetic field simulator.

In this figure, the horizontal axis indicates the frequency (800 to 1100 MHz), whereas the vertical axis indicates the antenna gain (-4 to 2 dBi). The antenna gain shown in this figure is the largest in the vicinity of 1050 MHz.

Namely, there is a disadvantage that the reflection is high in the vicinity of 1050 MHz. However, since the antenna gain is large in the vicinity of 1050 MHz as shown in Fig. 3, this compensates for the disadvantage of the high reflection.

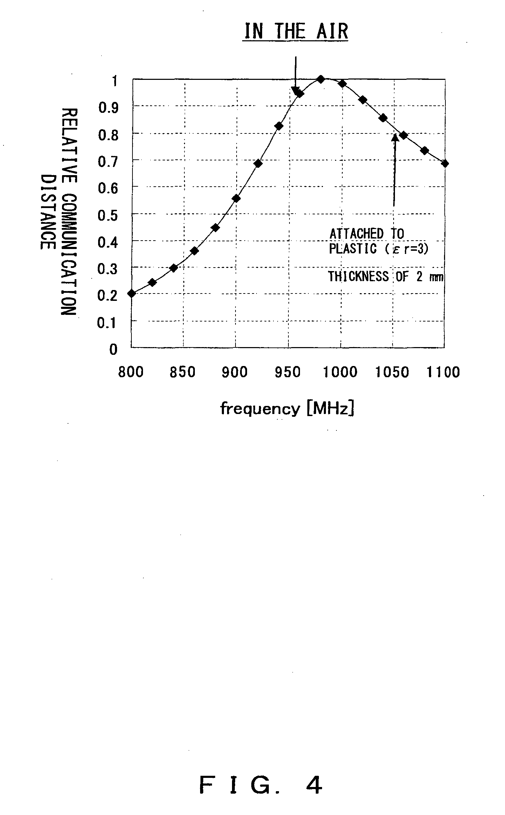

Fig. 4 is a chart representing a communication distance characteristic obtained by combining the above described reflection characteristic and gain characteristic of the dipole antenna 2 of the tag 1.

In this figure, the horizontal axis indicates the frequency (800 to 1100 MHz), whereas the vertical axis indicates a communication distance relative to the maximum distance as a reference.

As described above, the communication distance characteristic of the dipole antenna 2 of the tag 1 is asymmetrical with respect to the operational frequency 953 MHz of the reader/writer. The communication distance characteristic moderately changes on the side of frequencies higher than the operational frequency 953 MHz of the reader/writer, and is relatively stable.

The calculations by the above electromagnetic field simulator are made by assuming that air exists above and below the resinous protection films 8 shown in Fig. 1. Therefore, the communication distance at the operational frequency 953 MHz of the reader/writer is a distance in a case where the tag 1, namely, the dipole antenna 2 is in air.

The communication distance in air is a distance obtained by multiplying the specified maximum distance shown in Fig. 4 by 0.95. Namely, 95 percent of the maximum distance is secured.

When this tag 1 is attached, for example, to plastic with εr of 3 and a thickness of 2 mm, an effective permittivity in the periphery of the antenna increases, and a band is shifted by approximately 10 percent. Namely, the waveform shown in Fig. 4 is shifted to the side of the low frequencies approximately by 100 MHz.

In other words, the value of the relative communication distance at the frequency 1050 MHz that is higher than 953 MHz by approximately 10 percent in the waveform of Fig. 4 is a communication distance when the tag 1 is attached to the plastic with the thickness of 2 mm.

A ratio of the communication distance at this time to the maximum distance shown in Fig. 4 is 0.8, that is, 80 percent of the maximum distance is secured.

As is proved also from Fig. 4, the tag 1 can secure the distance of up to 80 percent or more of the maximum communication distance and has an extremely high distance stability (range) even in air or even if it is attached to foamed polystyrene or 2-mm-thick plastic.

The tag 1 features an antenna pattern composed of the dipole parts and the inductance part is adjusted to become as close to the optimum value of the antenna as possible in the vicinity of the operational frequency 953 MHz of the reader/writer.

At frequencies higher than 953 MHz, an increase in the gain of the antenna prevents the communication distance characteristic from being degraded although the reflection goes away from the optimum value of the antenna and becomes higher.

To improve the antenna gain at the frequencies higher than 953 MHz, the total length of the antenna is made closer to one half of the resonance wavelength of the antenna, which achieves high gain efficiency.

The antenna pattern of the dipole antenna 2 of the tag 1 has the feature that the total length of the antenna when all the bending parts 7 are linearly stretched (when all the folded parts are added up) is made slightly shorter than one half of the resonance wavelength λ of the antenna.

In the configuration shown in Fig. 1, the total length of the antenna when all the bending parts 7 are linearly stretched is approximately 120 mm, and one half of the resonance wavelength λ of the antenna is approximately 130 to 140 mm. The tolerable margin 10 mm of the resonance wavelength λ of the antenna is set in consideration of the resinous protection films 8 overlaid on the top and the bottom surfaces.

Additionally, the dipole parts 6 are bent inwardly from the end in order to make the units as linear as possible. Moreover, it is preferable to form the inductance unit 4 between the dipole units 6 and 6, since it is desirable not to make the dipole units 6 and 6 close.

With this configuration, impedance at 953 MHz is set to a value close to the optimum value of the antenna, and the gain of the antenna becomes largest in the vicinity of 1050 MHz.

In this way, the tag 1 having an extremely high distance stability, which can secure the distance of up to 80 percent or more of the maximum communication distance, can be secured even in the air, or even if the tag is attached to foamed polystyrene or 2-mm-thick plastic.

In the tag 1 with the dimensions of 53 mm wide by 7 mm deep, the four bending parts 7 are formed in each of the dipole units 6 and 6 as shown in Fig. 1. To reduce the dimensions of the antenna, the number of bending parts 7 in each of the dipole units 6 and 6 may be increased to five, six, or a larger number.

### (Preferred Embodiment)

The above described tag 1 is a tag that outputs a linear polarized wave. In the preferred embodiment, two of the above described tags 1 that each output a linear polarized wave are used unchanged without providing a special circuit, etc., and a crossed dual tag that generates a circular polarized wave and extends its communication distance with a reader/writer is implemented.

An upper portion of Fig. 5 is a perspective view showing the configuration of the tag that generates the circular polarized wave in the preferred embodiment, whereas a lower portion of Fig. 5 is a top view showing the configuration shown in the upper portion of Fig. 5, from which the resinous protection film is removed.

For the tag 1 shown in Fig. 1, right and left portions (plus X and minus X directions) of its longer side are symmetrical with respect to the center, but upper and lower portions (plus Y and minus Y directions) of its shorter side are not symmetrical with respect to the center.

The crossed dual tag 10 shown in Fig. 5 is configured by crossing at right angles two tags 1 (1a, 1b) similar to that shown in Fig. 1, and by stacking them. The configuration of the tags 1a and 1b is the same as that described in Fig. 1.

In the lower portion of Fig. 5, arrows nearby the tag 1a, which are assigned with X, Y, and Z, indicate their corresponding directions, and designate the orientation of the tag 1a. Arrows nearby the tag 1b designate the orientation of the tag 1b in a similar manner.

In this embodiment, the tag the plus Y direction of which is orientated in the plus X direction of the other tag is referred to as the first tag 1a, whereas the tag whose plus Y direction is orientated in the minus X direction of the other tag is referred to as the second tag 1b.

Namely, the crossed dual tag 10 in this embodiment is composed of the first and the second tags 1a and 1b, which are crossed at the angle of 90° so that the loops of the inductance parts 4 (4a, 4b) overlap as much as possible. Additionally, the first and the second tags 1a and 1b are stacked to contact as closely as possible in their overlapping portion.

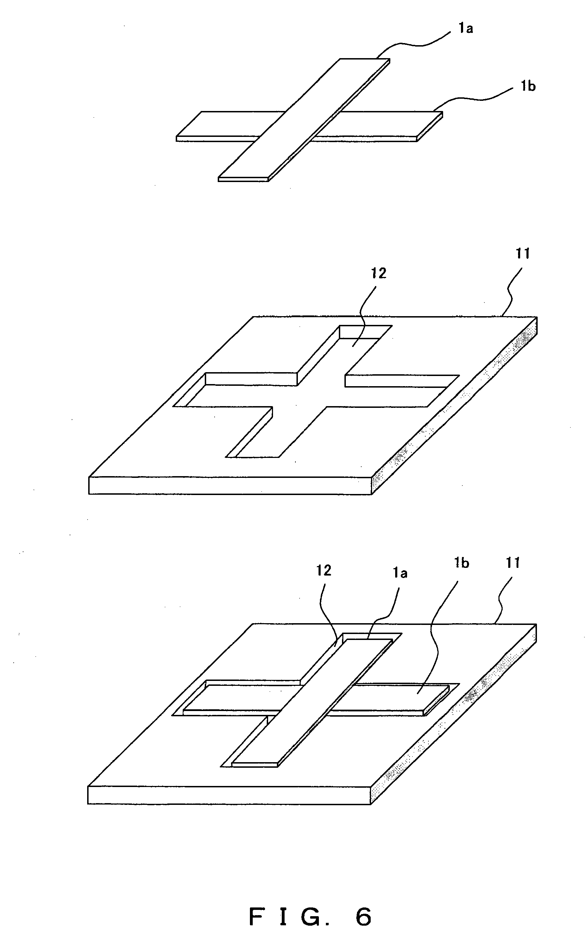

In Fig. 6, the upper portion schematically represents the first and the second tags 1a and 1b stacked in the shape of a cross, the middle portion represents a holder made of, for example, resin, etc., and the lower portion shows the first and the second tags 1a and 1b held by the holder 11.

In the holder 11, a cross-shaped groove 12 is formed as shown in the middle portion of Fig. 6. The first and the second tags 1a and 1b are inserted in the cross-shaped groove 12, and pressed and secured from above with a suitable member not shown.

The configuration of the crossed dual tag 10 implemented by crossing and stacking the first and the second tags 1a and 1b is not limited to the configuration held by the holder 11 where the cross-shaped groove 12 is formed. For example, the first and the second tags 1a and 1b may be sealed between two resinous sheets.

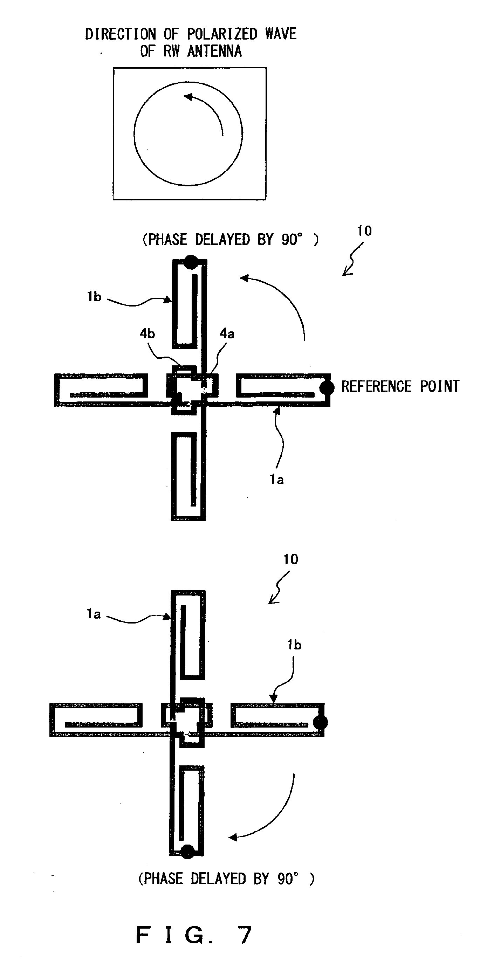

In Fig. 7, the upper portion is a schematic diagram representing the direction of the polarized wave of the antenna of the reader/writer (R/W), the middle portion is a schematic diagram for explaining the operations of the crossed dual tag 10 performed when the polarized wave surface of the first tag 1a is orientated in the direction of the reader/writer, and the lower portion is a schematic diagram for explaining the operations of the crossed dual tag 10 performed when the polarized wave surface of the second tag 1b is orientated in the direction of the reader/writer.

If the polarized wave surface of the first tag 1a is orientated in the direction of the reader/writer as shown in the middle portion of Fig. 7, the first tag 1a operates.

When the first tag 1a initially operates as described above, a current flows into the loop of the inductance unit 4a of the first tag 1a. As a result, high-frequency coupling is made between the loop of the inductance unit 41 of the first tag 1a and that of the inductance unit 4b of the second tag 1b. Consequently, the second tag 1b operates with its phase delayed by 90° as will be described later.

If the polarized wave surface of the second tag 1b is orientated in the direction of the reader/writer as shown in the lower portion of Fig. 7, the second tag 1b operates.

When the second tag 1b initially operates as described above, a current flows into the loop of the inductance unit 4b of the second tag 1b. As a result, high-frequency coupling is made between the loop of the inductance unit 4b of the second tag 1b and that of the inductance unit 4a of the first tag 1a. Consequently, the first tag 1b operates with its phase delayed by 90°.

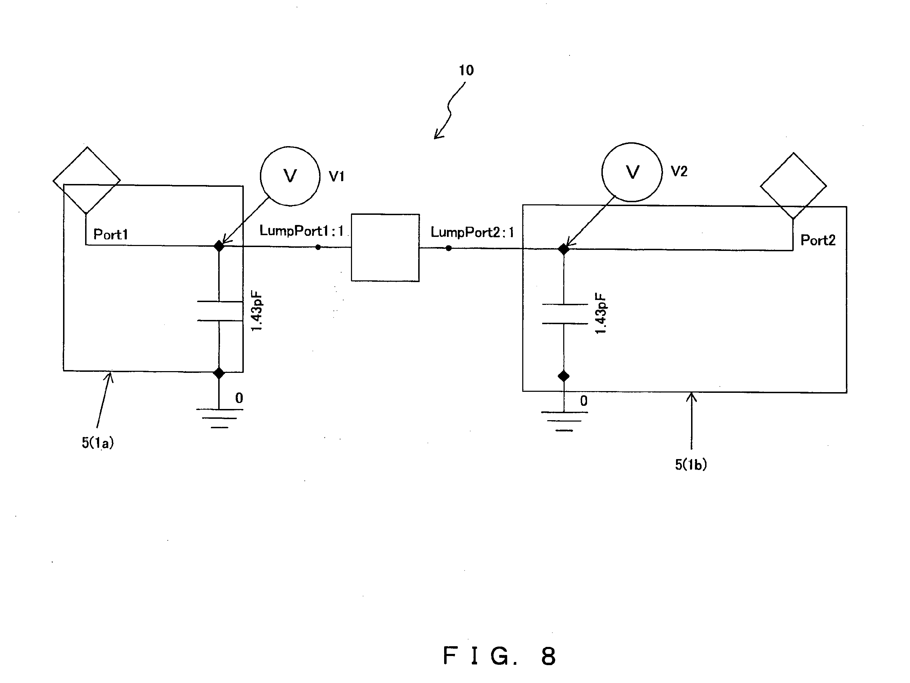

Fig. 8 is a schematic diagram showing a calculation model for calculating the operations of the above described crossed dual tag 10 with an electromagnetic field simulator.

Both the IC chips 5 and 5 of the first and the second tags 1a and 1b respectively have a capacitive component Ccp of 1.43 pF. Additionally, the IC chips 5 and 5 respectively have an internal impedance Rcp of 420 Ω.

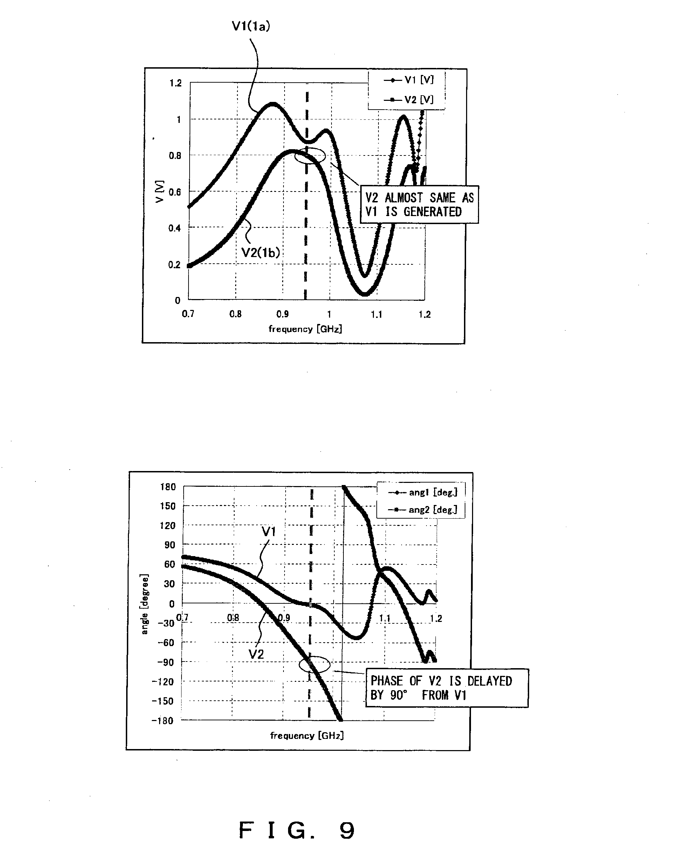

Fig. 9 shows charts representing results of the calculation made by the electromagnetic field simulator. The upper chart of Fig. 9 represents the relationship between voltages respectively generated in the IC chips 5 and 5 of the first and the second tags 1a and 1b and their cycles, and the lower chart of Fig. 9 represents the relationship between the cycles and the phases of the voltages respectively generated in the IC chips 5 and 5.

In the upper chart of Fig. 9, the horizontal axis indicates the cycles of the voltages from 0.7 to 1.2 GHz, whereas the vertical axis indicates the voltages from 0 to 1.2V.

In the cycle at the frequency of 0.953 GHz, a voltage V1 is generated in the IC chip of the tag 1a, and a voltage V2 almost the same as the voltage V1 (0.88V) is generated in the IC chip of the tag 1b as shown in the upper chart of Fig. 9.

In the lower chart of Fig. 9, the horizontal axis indicates the cycles of the voltages from 0.7 to 1.2 GHz, whereas the vertical axis indicates the phases of the cycles from minus 180° to plus 180°.

It is proved from the relationship between the cycles and the phases shown in the lower chart of Fig. 9 that the phase of the voltage V2 of the tag 1b is delayed by 90° from that of the voltage V1 of the tag 1a at the cycle of 0.953 GHz that generates the voltage V2 almost the same as the voltage V1 of the tag 1a as shown in the upper chart.

Namely, the voltage of 0.8V is generated in the tag 1b compared with the voltage of 0.88V generated for the tag 1a at the operational frequency of 953 MHz, and the phase of the tag 1b is delayed from that of the tag 1a as shown in Fig. 9.

That is, the above described operation performed with the phase delayed by 90° is repeated at the cycle of 0.953 GHz. Therefore, operations close to those of a circular polarized wave are proved to be performed when the tags 1a and 1b are regarded as one pair.

Ideally, however, it is preferable that operations closer to those of the circular polarized wave are performed by generating the same voltages in both the tags 1a and 1b, and by shifting their phases by 90°.

Additionally, if the direction of the circular polarized wave of the reader/writer (the counterclockwise direction in the upper portion of Fig. 7) matches the rotational direction of the crossed dual tag 10 as shown in the middle portion of Fig. 7 at this time, their communication distance is increased.

Namely, information possessed by the tag 1a can be read also in a distance increased by √2, namely, 1.41 times the maximum communication distance between the reader/writer generating the circular polarized wave and the tag generating the linear polarized wave.

In contrast, the tag 1a operates with its phase delayed by 90° as shown in the lower portion of Fig. 7 when the tag 1b initially operates, the direction of the operation of the above circular polarized wave is opposite to the rotational direction of the circular polarized wave of the reader/writer. Accordingly, the communication distance of the tag 1b becomes shorter inversely to the case of the tag 1a.

However, if the reader/writer is configured to be able to switch the rotational direction of the circular polarized wave between forward and backward directions at predetermined cycles, both of the tags 1a and 1b can make a communication in the distance increased by 1.41 times the distance in the case of the single tag.

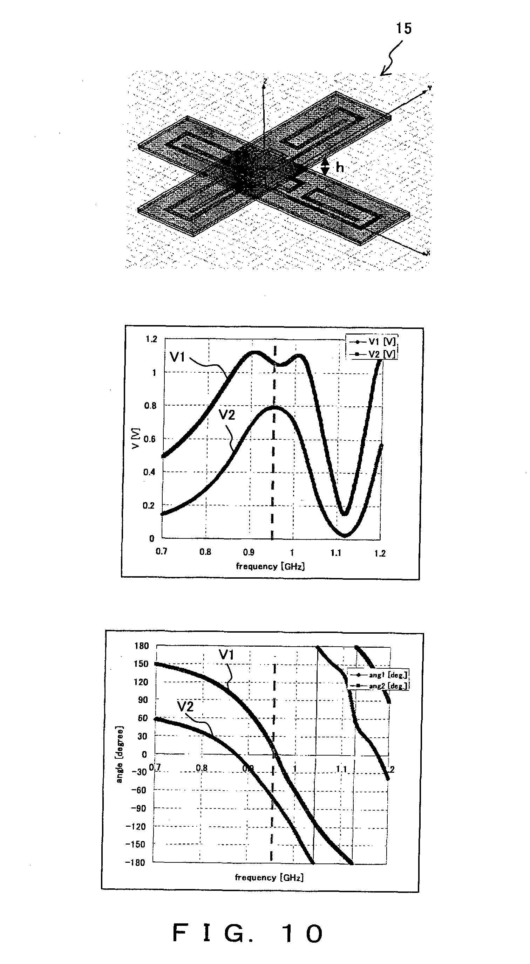

Fig. 10 is charts representing results of the calculations made by the electromagnetic field simulator when the tags 1a and 1b do not make close contact each other in their overlapping portion (crossed portion), and have a gap of a distance h of 1 mm.

The upper portion of Fig. 10 is a schematic diagram showing a crossed dual tag 15 implemented by crossing the tags 1a and 1b with the gap of the distance h of 1 mm, the middle portion of Fig. 10 is a chart representing the relationship between voltages respectively generated in the tags 1a and 1b and their cycles, and the lower portion of Fig. 10 is a chart representing the relationship between the cycles and the phases of the voltages respectively generated in the tags 1a and 1b.

Making a comparison between the chart in the middle portion of Fig. 10 and that in the upper portion of Fig. 9, the voltage V2 generated in the tag 1b is slightly reduced with respect to the voltage V1 generated in the tag 1a.

Also making a comparison between the charts in the lower portions of Figs. 9 and 10, the phase difference between the voltage V1 generated in the tag 1a and the voltage V2 generated in the tag 1b is proved to be 75°. Namely, the circular polarized wave is slightly deformed.

According to the above results, it is preferable to make the tags 1a and 1b contact as closely as possible in the crossed portion so as to generate a circular polarized wave in the crossed dual tag.

It is also proved that an elliptical polarized wave is generated when the tags are crossed not in close contact but with a predetermined gap.

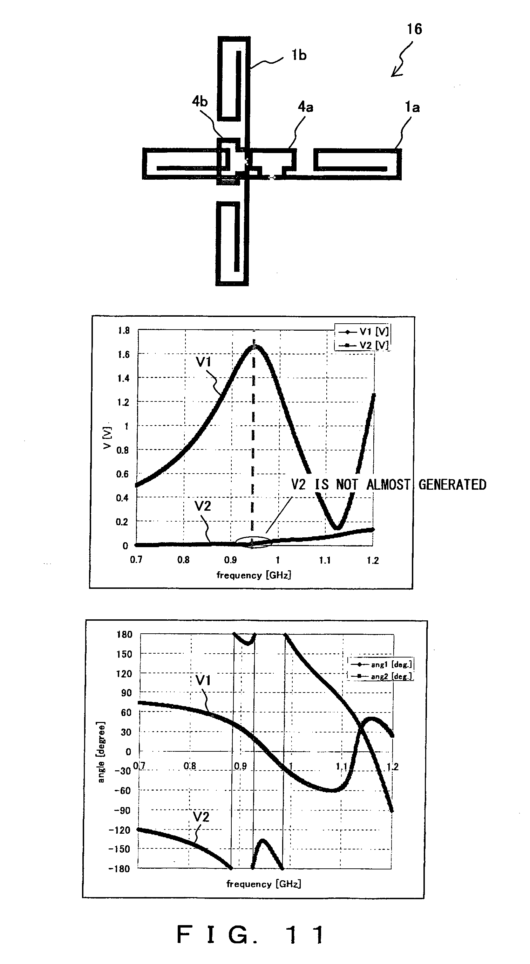

Fig. 11 is charts representing results of calculations made by the electromagnetic field simulator when the loops of the inductance parts 4a and 4b of the tags 1a and 1b are made not to overlap at all.

A schematic diagram in the upper portion of Fig. 11 shows a crossed dual tag 17 implemented by crossing the tags 1a and 1b by causing the loops of the inductance parts not to overlap at all. A chart in the middle portion of Fig. 11 shows the relationship between voltages respectively generated in the tags 1a and 1b and their cycles. A chart in the lower portion of Fig. 11 shows the relationship between the cycles and the phases of the voltages respectively generated in the tags 1a and 1b.

It is proved from the chart in the middle portion of Fig. 11 that the voltage V2 of the tag 1b is almost not generated compared to the voltage V1 generated in the tag 1a, namely, resonant coupling is not made between the tags.

Therefore, it is preferable to make the loops of the inductance units of the tags 1a and 1b overlap as much as possible. Accordingly, it is preferable that the loops of the inductance units take the shape of a square, a circle or their similar shapes.

The above described preferred embodiments refer to an RFID system in the UHF band. However, the present invention is applicable also to RFID system of 2.45 GHz as a matter of course.

Additionally, the above described preferred embodiments refer to the cases where the side of the reader/writer generates a circular polarized wave. However, if the side of the reader/writer generates an elliptical polarized wave between the linear and the circular polarized waves, the side of the crossed dual tag may be operated with the elliptical polarized wave by crossing and stacking the two tags not at the angle of 90° but at the angle of, for example, 60°.

Alternatively, the crossed dual tag can be operated with the elliptical polarized wave by displacing the loops of the inductance parts relative to each other.

It is preferable that the loops of the inductance parts take the shape of a square, a circle, or their similar shapes as described above. However, if the loops take the shape of a rectangle, the tags can perform operations sufficiently close to those with the circular polarized wave. Therefore, the crossed dual tag and the RFID system using the crossed dual tag are also applicable to two tags as a matter of course as far as the tags respectively have loops.

### (third preferred embodiment)

An environment for actually using the crossed dual tag is described here.

When tags are mass-produced, different IDs are respectively written to the tags in normal cases. Accordingly, with the crossed dual tag configured according to the present invention, the reader/writer reads the two IDs of the tags 1a and 1b when making a communication with the crossed dual tag in a short distance.

Accordingly, it is preferable to make the reader/writer read information of only the tag 1a by designating the tag 1b as a dummy, and by pre-specifying the ID of the tag 1b as "kill" within the reader/writer when the tag 1a is assumed to be the tag desired to be read by the side of the reader/writer.

This is based on the assumption that different IDs are respectively written to all tags at the factory shipment. However, there are tag types provided with a user memory where information is freely writable to an area within an IC chip.

In such a case, writing the same information to both of user areas of the tags 1a and 1b prevents a problem from occurring even when the reader/writer reads the tag 1b in a short distance.

Additionally, the circular polarized wave surface of the reader/writer is switched in the reverse direction, whereby the communication distance of the tag 1b can be extended, and that of the tag 1a can be shortened as is evident from Fig. 7.

As described above, the reader/writer can read information of both of the tags 1a and 1b in the extended communication distance by switching the circular polarized wave surface of the reader/writer between the forward and the backward directions. Namely, it becomes possible to make the reader/writer read different information respectively written to the two user memories, thereby preventing the user memories from being wasted.

Conventionally, in order to implement circular polarized waves of the tags, two tags generating linear polarized waves must be crossed, and a complicated circuit such as a 90° phase shifter, etc. must be provided as described above. With the crossed dual tag according to the present invention, however, a communication distance with a reader/writer can be extended only by crossing and stacking existing tags that generate linear polarized waves and respectively have a loop of an inductance part.

## Claims

1. A crossed dual tag(10), including
first and second tags(1a,1b), each of which comprises, on one plane,
a dipole antenna(2) formed with conductors,
a feeding part (3) to which an IC chip (5) is connected at a center of the dipole antenna(2), and
a loop-shaped inductance part(4a,4b) that is formed between dipole parts (6,6) of the dipole antenna(2), and connected to the dipole parts (6,6) of the dipole antenna (2) in parallel with respect to the feeding part(3), wherein
the first and the second tags (1a,1b) are crossed so that loops of the inductance parts(4a,4b) overlap.

2. The crossed dual tag(10) according to claim 1, wherein
the inductance part (4a,4b) is formed in a shape of a square, a circle, or a loop similar to the square or the circle.

3. The crossed dual tag(10) according to claims 1 or 2, wherein
the first and the second tags (1a,1b) are crossed so that loops of the inductance parts (4a, 4b) overlap as much as possible, and stacked to contact as closely as possible.

4. The crossed dual tag(10) according to any of claims 1 to 3, wherein
the first and the second tags(1a,1b) generate a circular polarized wave at a crossing angle(7-1,7-2,7-3,7-4) of 90°.

5. The crossed dual tag (10) according to any of claims 1 to 4, further comprising
a holding member(11) having a groove(12) according to a crossed shape of the first and the second tags(1a,1b), wherein
the holding member(11) holds the first and the second tags(1a,1b) in the crossed shape with the groove(12) of the holding member(11).

6. An RFID (Radio Frequency IDentification) system, including:
a crossed dual tag(10) according to claim 1 and
a reader/writer that emits a wireless signal of a circular polarized wave in order to read information of the first(1a) or the second(1b) tag.

7. The RFID system according to claim 6, wherein
the first tag (1a) is set as a tag from which information is to be read, the second tag(1b) is set as a tag from which information is not to be read, and the reader/writer always reads only the information of the first tag(1a).

8. The RFID system according to claim 6, wherein:
the first and the second tags(1a,1b) respectively have user memory areas to which same information is written; and
the reader/writer switches a surface of the circular polarized wave of the wireless signal between forward and backward directions, and reads the information written to the user memory area from the first(1a) or the second(1b) tag, which responds more strongly to the switched circular polarized wave.

9. The RFID system according to claim 6, wherein:
the first and the second tags(1a,1b) respectively have user memory areas to which mutually different information are written; and
the reader/writer sequentially switches a surface of the circular polarized wave of the wireless signal between forward and backward directions, and reads the information written to the user memory areas from both of the first and the second tags(1a,1b) by reading the information written to the user memory area from the first(1a) or the second(1b) tag, which responds more strongly to the switched circular polarized wave.

## Patentansprüche

1. Gekreuztes doppeltes Tag (10), das Folgendes aufweist:
ein erstes und ein zweites Tag (1a, 1b), von welchen jedes auf einer Ebene Folgendes aufweist:
eine Dipolantenne (2), die mit Leitern ausgebildet ist,
ein Stromzuführungsteil (3), mit dem ein IC-Chip (5) an einer Mitte der Dipolantenne (2) verbunden ist, und
ein schleifenförmiges Induktanzteil (4a, 4b), das zwischen Dipolteilen (6, 6) der Dipolantenne (2) ausgebildet ist und mit den Dipolteilen (6, 6) der Dipolantenne (2) parallel in Bezug zu dem Stromzuführungssteil (3) geschaltet ist, wobei
das erste und das zweite Tag (1a, 1b) gekreuzt sind, so dass Schleifen der Induktanzteile (4a, 4b) überlappen.

2. Gekreuztes doppeltes Tag (10) nach Anspruch 1, wobei
das Induktanzteil (4a, 4b) in einer Form eines Quadrats, eines Kreises oder einer Schleife ähnlich mit dem Quadrat oder dem Kreis ausgebildet ist.

3. Gekreuztes doppeltes Tag (10) nach Anspruch 1 oder 2, wobei
das erste und das zweite Tag (1a, 1b) gekreuzt sind, so dass Schleifen der Induktanzteile (4a, 4b) so viel wie möglich überlappen und gestapelt sind, um sich so nahe wie möglich zu berühren.

4. Gekreuztes doppeltes Tag (10) nach einem der Ansprüche 1 bis 3, wobei
das erste und das zweite Tag (1a, 1b) eine kreisförmige polarisierte Welle an einem Kreuzungswinkel (7-1, 7-2, 7-3, 7-4) von 90° erzeugen.

5. Gekreuztes doppeltes Tag (10) nach einem der Ansprüche 1 bis 4, das ferner Folgendes aufweist:
ein Halteelement (11), das eine Hohlkehle (12) gemäß einer gekreuzten Form des ersten und des zweiten Tags (1a, 1b) hat, wobei
das Halteelement (11) das erste und das zweite Tag (1a, 1b) in der gekreuzten Form mit der Hohlkehle (12) des Halteelements (11) hält.

6. Hochfrequenz-Identifikationstag-System (RFID), das Folgendes aufweist:
ein gekreuztes doppeltes Tag (10) nach Anspruch 1, und
eine Lese-/Schreibvorrichtung, die ein drahtloses Signal einer kreisförmigen polarisierten Welle sendet, um Informationen von dem ersten (1a) oder dem zweiten (1b) Tag zu lesen.

7. RFID-System nach Anspruch 6, wobei
das erste Tag (1a) als ein Tag eingestellt ist, von dem Informationen zu lesen sind, das zweite Tag (1b) als ein Tag eingestellt ist, von dem Informationen nicht zu lesen sind, und die Lese-/Schreibvorrichtung immer nur die Informationen des ersten Tags (1a) liest.

8. RFID-System nach Anspruch 6, wobei:
das erste und das zweite Tag (1a, 1b) jeweils Benutzerspeicherbereiche haben, zu welchen dieselben Informationen geschrieben werden, und
die Lese-/Schreibvorrichtung eine Oberfläche der kreisförmigen polarisierten Welle des drahtlosen Signals zwischen Vorwärts-und Rückwärtsrichtung umschaltet und die Informationen, die zu dem Benutzerspeicherbereich von dem ersten (1a) oder dem zweiten (1b) Tag geschrieben werden, die stärker auf die umgeschaltete kreisförmige polarisierte Welle reagieren, liest.

9. RFID-System nach Anspruch 6, wobei:
das erste und das zweite Tag (1a, 1b) jeweils Benutzerspeicherbereiche haben, zu welchen gegenseitig unterschiedliche Informationen geschrieben werden, und
die Lese-/Schreibvorrichtung sequenziell eine Oberfläche der kreisförmigen polarisiertem Welle des drahtlosen Signals zwischen Vorwärts- und Rückwärtsrichtung umschaltet und die Informationen liest, die zu den Benutzerspeicherbereichen sowohl von dem ersten als auch von dem zweiten Tag (1a, 1b) geschrieben werden, indem die Informationen gelesen werden, die zu dem Benutzerspeicherbereich von dem ersten (1a) oder dem zweiten (1b) Tag geschrieben werden, die stärker auf die umgeschaltete kreisförmige polarisierte Welle reagieren.

## Revendications

1. Etiquette double croisée (10) comprenant :
des première et seconde étiquettes (1a, 1 b), chacune d'elles comprenant, sur un seul plan,
une antenne dipôle (2) formée de conducteurs,
une partie alimentation (3) à laquelle une puce à circuit intégré (5) est reliée au centre de l'antenne dipôle (2), et
une partie inductance en forme de boucle (4a, 4b) qui est formée entre des parties dipôle (6, 6) de l'antenne dipôle (2) et reliée aux parties dipôle (6, 6) de l'antenne dipôle (2) parallèlement à la partie alimentation (3), dans laquelle
les première et seconde étiquettes (1a, 1b) se croisent de sorte que les boucles des parties inductance (4a, 4b) se chevauchent.

2. Etiquette double croisée (10) selon la revendication 1, dans laquelle
la partie inductance (4a, 4b) a la forme d'un carré, d'un cercle ou d'une boucle similaire à un carré ou à un cercle.

3. Etiquette double croisée (10) selon les revendications 1 ou 2, dans laquelle
les première et seconde étiquettes (1a, 1b) se croisent de sorte que les boucles des parties inductance (4a, 4b) se chevauchent le plus possible, et sont empilées pour être en contact le plus étroitement possible.

4. Etiquette double croisée (10) selon l'une quelconque des revendications 1 à 3, dans laquelle
les première et seconde étiquettes (1a, 1b) génèrent une onde polarisée circulaire à un angle de croisement (7-1, 7-2, 7-3, 7-4) de 90 °.

5. Etiquette double croisée (10) selon l'une quelconque des revendications 1 à 4, comprenant en outre
un élément de maintien (11) comportant une rainure (12) correspondant à la forme croisée des première et seconde étiquettes (1a, 1b), dans laquelle
l'élément de maintien (11) maintient les première et seconde étiquettes (1a, 1 b) de forme croisée avec la rainure (12) de l'élément de maintien (11).

6. Système d'identification par radiofréquence (RFID) comprenant :
une étiquette double croisée (10) selon la revendication 1 ; et
un dispositif de lecture/écriture qui émet un signal radioélectrique d'une onde polarisée circulaire afin de lire les informations de la première étiquette (1a) ou de la seconde (1 b).

7. Système RFID selon la revendication 6, dans lequel
la première étiquette (1a) est définie comme étant une étiquette à partir de laquelle des informations doivent être lues, la seconde étiquette (1 b) est définie comme étant une étiquette à partir de laquelle aucune information ne doit être lue, et le dispositif de lecture/écriture va systématiquement lire uniquement les informations de la première étiquette (1a).

8. Système RFID selon la revendication 6, dans lequel :
les première et seconde étiquettes (1a, 1b) comportent respectivement des zones de mémoire utilisateur dans lesquelles sont écrites les mêmes informations ; et
le dispositif de lecture/écriture commute une surface de l'onde polarisée circulaire du signal radioélectrique entre les directions avant et arrière, et lit les informations écrites dans la zone de mémoire utilisateur de la première ou de la seconde étiquette (1a, 1b) qui réagit plus fortement à l'onde polarisée circulaire commutée.

9. Système RFID selon la revendication 6, dans lequel :
les première et seconde étiquettes (1a, 1b) comportent respectivement des zones de mémoire utilisateur dans lesquelles sont écrites des informations différentes ; et
le dispositif de lecture/écriture commute successivement une surface de l'onde polarisée circulaire du signal radioélectrique entre les directions avant et arrière, et lit les informations écrites dans les zones de mémoire utilisateur de la première et de la seconde étiquette (1a, 1b) en lisant les informations écrites dans la zone de mémoire utilisateur de la première (1a) ou de la seconde étiquette (1b) qui réagit plus fortement à l'onde polarisée circulaire commutée.
